# EUROPEAN PATENT APPLICATION

(11) **EP 2 420 410 A1**
(43) Date of publication of application: **22.02.2012**
(21) Application number: 10173373.1
(22) Date of filing: 19.08.2010
(51) Int. Cl.: B60R 1/00

(54) **Method for Presenting an Image in a Vehicle**

(71) Applicant: Harman Becker Automotive Systems GmbH, 76307 Karlsbad (DE)
(72) Inventor: Mauderer, Hans-Peter, 76571, Gaggenau (DE); Huebner, Klaus, 75181, Pforzheim (DE)
(74) Representative: Bertsch, Florian Oliver

(57) **Abstract**

The present invention relates to a method for presenting an image (16) in a vehicle (1), and to a vehicle display system (2). The vehicle display system (2) comprises a camera (3) adapted to capture an image of an occupant (8, 10) sitting on a seat (9, 11) of the vehicle (1). The vehicle display system (2) comprises furthermore a display (4) adapted to display the image (16) to the occupant (8, 10).

## Description

The present invention relates to a method for presenting an image in a vehicle, and in particular for presenting an image of an occupant of the vehicle. Furthermore, the method relates to a vehicle display system.

### Background of the invention

In modern vehicles, for example cars and lorries, an increasing number of devices are incorporated for increasing safety, comfort, and convenience. In this context driver assist systems are used to monitor the attentiveness of the driver, for example by monitoring an eye activity of the driver. Therefore, cameras for monitoring the vehicle interior are provided. Furthermore, large high resolution colour displays are mounted or integrated in the vehicle, for example in a dashboard, for providing vehicle data, information of a navigation system or entertainment data, like videos or games.

On the other hand, there is a great demand in the vehicle industries to reduce costs and weight of the vehicles.

Therefore, it is an object of the present invention to reduce costs and weight of a vehicle without reducing comfort and safety.

### Summary of the invention

According to the present invention, this object is achieved by a method for presenting an image in a vehicle as defined in claim 1, and a vehicle display system as defined in claim 11. The dependent claims define preferred and advantageous embodiments of the invention.

According to an aspect of the present invention, a method of presenting an image in a vehicle is provided. According to the method, an image of an occupant sitting on a seat of the vehicle is captured and the image is displayed on a display of the vehicle to the occupant. The image may be captured with a camera which is already incorporated in the vehicle for capturing images of an inside of the vehicle for a driver assist system of the vehicle, for example for monitoring an attentiveness of the driver. The display may be a display of a navigation system, an entertainment system or a control system of the vehicle. The display may be mounted in a dashboard of the vehicle. By capturing an image of the occupant on the seat of the vehicle and displaying this image on a display in the dashboard of the vehicle to the occupant, a commonly used mirror, a so-called make-up mirror or vanity mirror, in the sun visors of the vehicle is not necessary and can therefore be omitted. Furthermore, an illumination for the mirror and a related electrical switching for the illumination can also be omitted. Therefore, costs of the vehicle can be saved and the weight of the vehicle can be reduced.

According to an embodiment, the captured image is processed before it is displayed on the display. By processing the captured image, the image can be adapted to the needs of the occupant. For example, a control information defining a scaling factor may be input by the occupant via a corresponding control element, and the image is automatically scaled in response to the scaling factor. Thus, the occupant can enlarge a certain area of the image or scale down the image. Further control elements may be provided for selecting the area to be displayed or for adjusting a brightness of the displayed image. Especially because of the possibility to enlarge the image, an additional comfort can be provided to the occupant compared to the traditional mirror in the sun visor. The processing of the captured image may furthermore comprise generating a mirror image of the image. Instead of presenting the captured image directly as it is seen by the camera, the captured image may be presented reversed left to right, such that it appears to the occupant as a reflection of a real mirror.

According to another embodiment, the camera is arranged in the display or adjacent to the display, for example above or beside the display. The camera is arranged, such that its optical axis is in general perpendicular to a display surface of the display. By arranging the camera near the display and perpendicular to the display surface parallax errors can be avoided. Furthermore, when the display is mounted in the middle of the dashboard or a center console of the vehicle with the camera being arranged in or adjacent to the display an image of the driver as well as of another front seat passenger or co-driver can be captured with one camera. This allows the camera to be used simultaneously for monitoring the driver's attentiveness and for capturing an image of the co-driver for a reproduction on the display.

The display may be a so-called dual view display which is adapted to display a first image in the direction of a driver seat of the vehicle and a further second image in the direction of another front passenger seat of the vehicle. Such dual view displays are commonly used in vehicles to display information independently for the driver and the co-driver. The first image may comprise for example information of a navigation system or a vehicle control system, whereas the second image may comprise information of a vehicle entertainment system, for example a video or a game, or may comprise the image captured by the camera, for example an image of the co-driver. Furthermore, the first image may comprise a captured image of the driver. Displaying the image of the driver as the first image to the driver may be restricted to certain driving situations, for example when the vehicle is not moving. The information which is displayed as the first image and the second image may be user-configurable via corresponding control elements. Therefore, the display may be used as a replacement for the mirrors in the sun visors of the driver and of the co-driver.

According to another embodiment, the image is displayed in real time on the display. By displaying the image in real time, the occupant will not recognized any difference between a real mirror and the virtual mirror image displayed on the display. Furthermore, control elements for freezing the displayed image may be provided to give the occupant the opportunity to make a snapshot of the captured image at a certain time and to take a closer look at this snapshot image thereafter.

According to another aspect of the present invention, a vehicle display system is provided. The vehicle display system comprises a camera adapted to capture an image of an inside of the vehicle including an occupant sitting on a seat of the vehicle, and a display adapted to display the image to the occupant. The vehicle display system may comprise a processing unit adapted to process the captured image before displaying the image on the display. The processing unit may be adapted to generate a mirror image of the image or to scale the image in response to a scaling factor which is input to the processing unit via an input device or a control element adapted to detect a control information received from the occupant and defining the scaling factor. The camera may be additionally used by a driver assist system of the vehicle for monitoring the attentiveness of the driver. The camera may be arranged in the display or adjacent to the display, such that the optical axis of the camera is in general perpendicular to a display surface of the display. The display may be additionally used by a navigation system, a vehicle entertainment system or a vehicle control system for displaying information of these systems. The display may be a so-called dual view display which is adapted to display a first image information in the direction of a driver seat of the vehicle and a second image information in the direction of another front passenger seat of the vehicle, for example a co-driver seat of the vehicle. The captured image may be displayed as the first image information or as the second image information in the direction of a driver seat or in the direction of a co-driver seat, respectively. The vehicle display system may be adapted to display the image in real time on the display which means that a live video of the content captured by the camera is displayed in real time on the display. Real time means in this context that a delay between capturing the image and displaying the image is less than a few hundred milliseconds and therefore the delay will not be recognized by the occupant.

The vehicle display system is therefore adapted to perform any one of the above described methods or a combination of the above described methods and comprises therefore the above described advantages.

Although specific features described in the above summary and the following detailed description are described in connection with specific embodiments, it is to be understood that the features of the embodiments can be combined with each other, unless noticed otherwise.

### Brief description of the drawings

The invention will now be described in more detail with reference to the accompanying drawings.
Fig. 1 schematically shows a vehicle comprising a vehicle display system according to an embodiment of the present invention.
Fig. 2 shows a flow-chart of a method according to an embodiment of the present invention.

### Detailed description of preferred embodiments

In the following, exemplary embodiments of the present invention will be described in more detail. It is to be understood that the following description is given only for the purpose of illustrating the principles of the invention and is not to be taken in a limiting sense. Rather, the scope of the invention is defined only by the appended claims and not intended to be limited by the exemplary embodiments hereinafter.

It is to be understood that the features of the various exemplary embodiments described herein may be combined with each other, unless noticed otherwise.

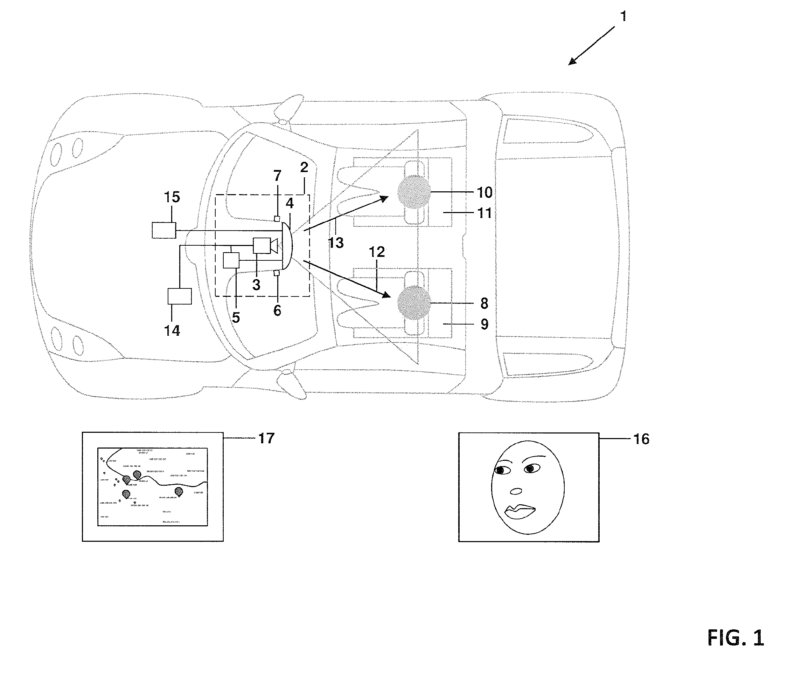

Fig. 1 shows a vehicle 1 comprising a vehicle display system 2. The vehicle display system 2 comprises a camera 3, a dual view display 4, a processing unit 5, a first control element 6, and a second control element 7. The dual view display 4 is arranged in a center of a dashboard of the vehicle 1 or in a center console of the vehicle 1 such that it can be viewed by a driver 8 sitting on a driver seat 9 as well as by a co-driver 10 sitting on another front passenger seat 11 of the vehicle 1. The dual view display 4 is adapted to display two images at the same time, wherein a first of the two images can only be viewed in a first viewing angle or a first viewing angle range and the second of the two images can only be viewed from a second viewing angle or a second viewing angle range. The first and the second viewing angles or viewing angle ranges are selected such that the first image can be viewed by a person sitting on the driver seat 9 and the second image can be viewed by a person sitting on the other front passenger seat 11. The viewing angle direction of the first image of the dual view display 4 is indicated by arrow 12 and the second viewing angle direction of the dual view display 4 is indicated by arrow 13. Thus, the driver 8 and the co-driver 10 may see a different content on the dual view display 4.

The camera 3 of the vehicle display system 2 is arranged such that it monitors the faces of the driver 8 and the co-driver 10. The camera 3 may be arranged adjacent to the display 4, for example above the display 4. Alternatively, the camera 3 may be incorporated in the display 4. An optical axis of the camera 3 may be perpendicular to a display surface of the display 4. The processing unit 5 is coupled to the camera 3 and the display 4 and adapted to receive images captured by the camera 3 and to display the images on the display 4 in the first display direction 12, in the second display direction 13 or in both display directions 12,13.

The first control element 6 is adapted to receive control information from the driver 8 and the second control element 7 is adapted to receive control information from the co-driver 10. The control elements 6, 7 may comprise any kind of control elements adapted to receive the control information necessary to control the display of the display system as will be described hereinafter. The control elements may comprise for example turning knops, push buttons, sliders, or a touch-sensitive surface on the display 4.

The vehicle 1 may comprise furthermore a driver assist system 14 connected to the camera 3. The driver assist system may be adapted to monitor a driver's attentiveness, for example by monitoring the opening state of the eyes of the driver 8. In case the driver assist system 14 recognizes that the driver is not attentive, for example due to closed eyes or very slowly moving pupils, a warning may be output by the driver assist system 14, for example by activating a steering wheel vibrator or activating a seatbelt retractor or outputting an acoustic or optic warning signal. Furthermore, the vehicle 1 may comprise further systems 15, for example a navigation system, a vehicle entertainment system or a vehicle control system, coupled to the dual view display 4. The navigation system may output map information and route guiding information on the display 4, the vehicle entertainment system may be adapted to output video information on the display 4, and the vehicle control system may be adapted to output vehicle status information to the driver 8 on the display 4.

Although the processing unit 5, the driver assist system 14 and the system 15 are shown in Fig. 1 as separate units, these systems may be combined in one or more units or may comprise each more than 1 unit.

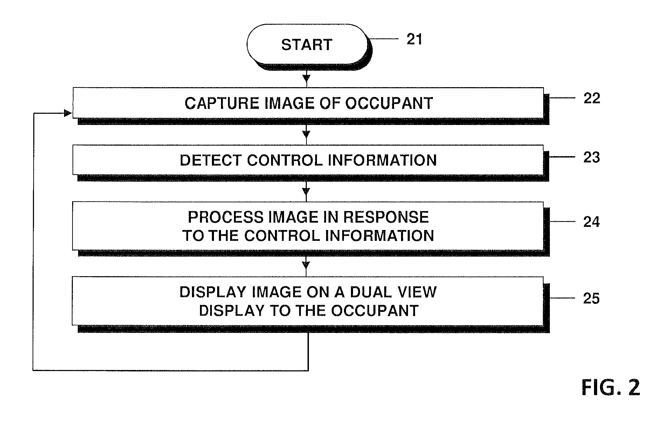

Operation of the vehicle display system 2 will now be described in more detail in connection with Figs. 1 and 2. With the control elements 6, 7 the driver 8 and/or the co-driver 10 may activate a so-called mirror function of the vehicle display system 2. When for example the co-driver 10 activates the mirror function by operating the control element 7, the mirror function is started as indicated by block 21 in Fig. 2. Camera 3 starts to capture an image of the co-driver 10 sitting on the co-driver seat 11 (block 22). A signal representing the captured image of the co-driver is transferred to the processing unit 5 and depending on control information received from the co-driver 10 via the control element 7 (block 23) the processing unit processes the received image (block 24). The processed image is then passed from the processing unit 5 to the display 4 and displayed by the dual view display 4 in the direction of the co-driver 10 (block 25). Capturing, processing, and displaying images is done continuously as indicated by the loop in the flow chart of Fig. 2. The control information received via the control element 7 and the corresponding processing will be described by way of examples in the following.

The control information may comprise for example an information indicating a section of the capturing area which should be displayed enlarged and in more detail on the display 4. This allows the occupant for example to display only the face of the occupant or an eye of the occupant on the display. With the help of the control element 7 further functions for processing the image may be controlled, for example a brightness or a contrast of the image displayed on the display 4 may be adjustable. This may replace a make-up mirror or a vanity mirror in a sun visor of the vehicle. The processing unit may furthermore be adapted to automatically determine a section in the captured image comprising the face of the occupant 10. In Fig. 1 the co-driver 10 then sees on the display 4 for example an image of his or her face as indicated by reference sign 16 in Fig. 1. As capturing, processing and displaying the image is done continuously and preferably in real time, the co-driver 10 will see a live video of his or her face on the dual view display 4. At the same time, the driver 8 may see on the dual view display 4 information of a navigation system 15 of the vehicle 1 as indicated by reference sign 17 in Fig. 1.

When the co-driver 10 deactivates the mirror function of the vehicle display system 2, other information may be displayed on the dual view display 4 in the direction of the co-driver 10, for example video information from a vehicle entertainment system 15.

Control element 6 allows the driver 8 of the vehicle 1 to activate the mirror function for viewing an image of the driver on the dual view display 4 in the direction of the driver 8. Activating this mirror function for the driver may be inhibited during certain driving conditions of the vehicle for safety reasons.

While exemplary embodiments of the invention have been described above, various modifications may be implemented in other embodiments. For example, instead of one camera 3 capturing an image of the driver 8 and the co-driver 10, two or more cameras may be incorporated in the vehicle 1 for capturing images of the driver 8 and the co-driver 10, respectively. Furthermore, the processing unit may be adapted to generate a mirror image from the captured image.

Finally, it is to be understood that all the embodiments described above are considered to be comprised by the present invention as it is defined by the appended claims.

## Claims

1. A method for presenting an image in a vehicle, the method comprising the steps of:
- capturing an image of an occupant (8, 10) sitting on a seat (9, 11) of the vehicle (1), and
- displaying the image (16) on a display (4) of the vehicle (1) to the occupant (8, 10).

2. The method according to claim 1, further comprising processing the captured image before displaying the processed image (16).

3. The method according to claim 2, wherein processing the captured image comprises generating a mirror image (16) of the image.

4. The method according to claim 2 or 3, wherein processing the captured image comprises:
- detecting a control information of the occupant (8, 10) defining a scaling factor, and
- scaling the image (16) in response to the scaling factor.

5. The method according to any one of the preceding claims, wherein the image is captured with a camera (3).

6. The method according to claim 5, wherein the camera (3) is adapted to be additionally used by a driver assist system (14) of the vehicle (1) for monitoring a driver's attentiveness.

7. The method according to claim 5 or 6, wherein the camera (3) is arranged in or adjacent to the display (4), the camera (3) being arrange such that its optical axis is in general perpendicular to a display surface of the display (4).

8. The method according to any one of the preceding claims, wherein the image (16) is displayed on a display (4) of the vehicle (1) selected from the group comprising a navigation system, a vehicle entertainment system and a vehicle control system.

9. The method according to any one of the preceding claims, wherein the image (16) is displayed on a dual view display (4) adapted to display a first image (17) in the direction (12) of a driver seat (9) of the vehicle (1) and a second image (16) in the direction (13) of another front passenger seat (11) of the vehicle (1), wherein the captured image is displayed as the first image or as the second image (16).

10. The method according to any one of the preceding claims, wherein the image (16) is displayed in real-time on the display (4).

11. A vehicle display system, comprising:
- a camera (3) adapted to capture an image of an occupant (8, 10) sitting on a seat (9, 11) of the vehicle (1), and
- a display (4) adapted to display the image (16) to the occupant (8, 10).

12. The vehicle display system according to claim 11, further comprising a processing unit (5) adapted to process the captured image before displaying the image (16).

13. The vehicle display system according to claim 12, wherein the processing unit (5) is adapted to generate a mirror image (16) of the image.

14. The vehicle display system according to claim 12 or 13, comprising an input device (6, 7) coupled to the processing unit (5), wherein the input device (6, 7) is adapted to detect a control information of the occupant (8, 10) defining a scaling factor, and wherein the processing unit (5) is adapted to scale the image (16) in response to the scaling factor.

15. The vehicle display system according to any one of claims 11-14, wherein the camera (3) is adapted to be additionally used by a driver assist system (14) of the vehicle (1) for monitoring a driver's attentiveness.

16. The vehicle display system according to any one of claims 11-15, wherein the camera (3) is arranged in or adjacent to the display (4), the camera (3) being arrange such that its optical axis is in general perpendicular to a display surface of the display (4).

17. The vehicle display system according to any one of claims 11-16, wherein the display (4) comprises a display of a system (15) of the vehicle (1) selected from the group comprising a navigation system, a vehicle entertainment system and a vehicle control system.

18. The vehicle display system according to any one of claims 11-17, wherein the display (4) comprises a dual view display (4) adapted to display a first image (17) in the direction (12) of a driver seat (9) of the vehicle (1) and a second image (16) in the direction (13) of another front passenger seat (11) of the vehicle (1), wherein the captured image is displayed as the first image or as the second image (16).

19. The vehicle display system according to any one of claims 11-18, wherein the image (16) is displayed in real-time on the display (4).

## Amended claims

### Amended claims in accordance with Rule 137(2) EPC.

**1.** A method for presenting an image in a vehicle, the method comprising the steps of:
- capturing an image of an occupant (8, 10) sitting on a seat (9, 11) of the vehicle (1), and
- displaying the image (16) on a display (4) of the vehicle (1) to the occupant (8, 10),
**characterized in that**
the image (16) is displayed on a dual view display (4) adapted to display a first image (17) in the direction (12) of a driver seat (9) of the vehicle (1) and a second image (16) in the direction (13) of another front passenger seat (11) of the vehicle (1), wherein the captured image is displayed as the first image or as the second image (16).

**2.** The method according to claim 1, further comprising processing the captured image before displaying the processed image (16).

**3.** The method according to claim 2, wherein processing the captured image comprises generating a mirror image (16) of the image.

**4.** The method according to claim 2 or 3, wherein processing the captured image comprises:
- detecting a control information of the occupant (8, 10) defining a scaling factor, and
- scaling the image (16) in response to the scaling factor.

**5.** The method according to any one of the preceding claims, wherein the image is captured with a camera (3).

**6.** The method according to claim 5, wherein the camera (3) is adapted to be additionally used by a driver assist system (14) of the vehicle (1) for monitoring a driver's attentiveness.

**7.** The method according to claim 5 or 6, wherein the camera (3) is arranged in or adjacent to the display (4), the camera (3) being arrange such that its optical axis is in general perpendicular to a display surface of the display (4).

**8.** The method according to any one of the preceding claims, wherein the image (16) is displayed on a display (4) of the vehicle (1) selected from the group comprising a navigation system, a vehicle entertainment system and a vehicle control system.

**9.** The method according to any one of the preceding claims, wherein the image (16) is displayed in real-time on the display (4).

**10.** A vehicle display system, comprising:
- a camera (3) adapted to capture an image of an occupant (8, 10) sitting on a seat (9, 11) of the vehicle (1), and
- a display (4) adapted to display the image (16) to the occupant (8, 10), **characterized in that**
the display (4) comprises a dual view display (4) adapted to display a first image (17) in the direction (12) of a driver seat (9) of the vehicle (1) and a second image (16) in the direction (13) of another front passenger seat (11) of the vehicle (1), wherein the captured image is displayed as the first image or as the second image (16).

**11.** The vehicle display system according to claim 10, further comprising a processing unit (5) adapted to process the captured image before displaying the image (16).

**12.** The vehicle display system according to claim 11, wherein the processing unit (5) is adapted to generate a mirror image (16) of the image.

**13.** The vehicle display system according to claim 11 or 12, comprising an input device (6, 7) coupled to the processing unit (5), wherein the input device (6, 7) is adapted to detect a control information of the occupant (8, 10) defining a scaling factor, and wherein the processing unit (5) is adapted to scale the image (16) in response to the scaling factor.

**14.** The vehicle display system according to any one of claims 10-13, wherein the camera (3) is adapted to be additionally used by a driver assist system (14) of the vehicle (1) for monitoring a driver's attentiveness.

**15.** The vehicle display system according to any one of claims 10-14, wherein the camera (3) is arranged in or adjacent to the display (4), the camera (3) being arrange such that its optical axis is in general perpendicular to a display surface of the display (4).

**16.** The vehicle display system according to any one of claims 10-15, wherein the display (4) comprises a display of a system (15) of the vehicle (1) selected from the group comprising a navigation system, a vehicle entertainment system and a vehicle control system.

**17.** The vehicle display system according to any one of claims 10-16, wherein the image (16) is displayed in real-time on the display (4).
